# EUROPÄISCHE PATENTSCHRIFT

(11) **EP 2 795 848 B1**
(45) Veröffentlichungstag und Bekanntmachung des Hinweises auf die Patenterteilung: **21.03.2018**
(21) Anmeldenummer: 12810261.3
(22) Anmeldetag: 20.12.2012
(51) Int. Cl.: H04L 12/40, G06F 13/42, H04L 12/413, H04L 29/12

(54) **TEILNEHMERSTATION EINES BUSSYSTEMS UND VERFAHREN ZUR ÜBERTRAGUNG VON NACHRICHTEN ZWISCHEN TEILNEHMERSTATIONEN EINES BUSSYSTEMS**
SUBSCRIBER STATION OF A BUS SYSTEM AND METHOD FOR TRANSFERRING MESSAGES BETWEEN SUBSCRIBER STATIONS OF A BUS SYSTEM
STATION PARTICIPANTE À UN SYSTÈME DE BUS ET PROCÉDÉ DE TRANSMISSION DE MESSAGES ENTRE DES STATIONS PARTICIPANTES À UN SYSTÈME DE BUS

(30) Priorität: 22.12.2011 DE 102011089587
(43) Veröffentlichungstag der Anmeldung: 29.10.2014
(73) Patentinhaber: Robert Bosch GmbH, 70442 Stuttgart (DE)
(72) Erfinder: HARTWICH, Florian, 72762 Reutlingen (DE); HORST, Christian, 72144 Dusslingen (DE)
(86) Internationale Anmeldenummer: PCT/EP2012/076299
(87) Internationale Veröffentlichungsnummer: WO 2013/092812

(56) Entgegenhaltungen:
- US-A1- 2008 104 294
- US-A1- 2011 222 433
- US-B1- 6 615 302

## Beschreibung

### Technisches Gebiet

Die vorliegende Erfindung betrifft eine Teilnehmerstation eines Bussystems und ein Verfahren zur Übertragung von Nachrichten zwischen Teilnehmerstationen eines Bussystems, bei welchen insbesondere Sendekonflikte selbständig durch eine Teilnehmerstation erkannt werden können.

### Stand der Technik

Derzeit ist ein Bussystem bekannt, bei welchem Nachrichten mittels des CAN-Protokolls übertragen werden, wie es in der CAN-Spezifikation in der ISO11898 beschrieben ist.

DE 100 00 305 A1 beschreibt das CAN (Controller Area Network = Steuereinrichtungsnetzwerk) sowie eine als TTCAN (Time Triggered CAN = Zeit getriggertes CAN) bezeichnete Erweiterung des CAN.

CAN und TTCAN arbeiten mit einem nachrichtenbasierten Protokoll und kommen beispielsweise in Fahrzeugen zum Einsatz. Ein auf CAN oder TTCAN basierendes Bussystem ermöglicht allen mit ihm verbundenen Teilnehmerstationen, wie beispielsweise Mikrocontrollern, miteinander zu kommunizieren.

### Zusätzliche Beschreibungsseite 1a

Die Offenlegungsschriften US 2011/0222433 A1 und US 2008/0104294 A1 offenbaren Verfahren zur Vergabe einer Adresse an eine Teilnehmerstation, die neu zu einem Bussystem hinzugefügt wird.

Da alle Teilnehmerstationen des CAN-Busses zum Senden von Nachrichten auf den CAN-Bus zugreifen wollen, muss die Berechtigung zum Senden von Nachrichten möglichst gerecht oder nach einem vorbestimmten Schema aufgeteilt werden. Diese Arbitrierung genannte Aufteilung erfolgt auf dem CAN-Bus bitweise durch Senden einer Identifizierungskennung, die auch Identifier genannt ist. Jede Identifizierungskennung steht für eine bestimmte Priorität der damit bezeichneten Nachricht bzw. der sie versendenden Teilnehmerstation als Sender. Je höher die Priorität der Nachricht, desto mehr dominante Bits werden vom Sender der Nachricht als Identifizierungskennung hinzugefügt. Je geringer die Priorität, desto mehr rezessive Bits werden hinzugefügt. Hierbei gilt, dass ein dominantes Bit eines Senders demgegenüber rezessive Bits von konkurrierenden Sendern überschreibt. Dadurch haben als wichtiger eingestufte Nachrichten Priorität vor als weniger wichtig eingestuften Nachrichten.

Demzufolge beobachtet jeder Sender, das heißt jede Teilnehmerstation, den gemäß dem CAN-Protokoll arbeitenden Bus über seinen Eingang, während der Sender Daten über seinen Sendeausgang, den Tx-Ausgang, sendet. Stellt der Sender fest, dass auf dem Bus ein dominantes Bit erscheint, während er selber eine Nachricht mit rezessivem Bit sendet, so wechselt der Sender vom Sendebetrieb in den Empfangsbetrieb. Dieses Verfahren der bitweisen, zerstörungsfreien Arbitrierung stellt sicher, dass spätestens mit Ende der Identifizierungskennung in einer Nachricht auf dem Bus nur noch eine sendende Teilnehmerstation ist, wohingegen alle anderen Teilnehmerstationen Empfänger sind.

Bei einem solchen Verfahren ist es jedoch Voraussetzung, dass jede an den CAN-Bus angeschlossene Teilnehmerstation als Sender für eine andere Identifizierungskennung konfiguriert ist. Senden nämlich zwei Teilnehmerstationen zeitgleich eine Nachricht mit derselben Identifizierungskennung, senden bei dem derzeitigen Verfahren beide Teilnehmerstationen nach dem Ende der Arbitrierung weiter. Dadurch kommt es auf dem Bus zur Zerstörung ihrer Nachrichten durch Überschreiten rezessiver Bits. Dies führt zum Datenverlust.

Darüber hinaus sind bei der Konfiguration eines CAN-Busses viele Abstimmungen und demzufolge aufwendige Dokumentationen erforderlich, damit alle Teilnehmerstationen eines CAN-Busses mit verschiedenen Identifizierungskennungen konfiguriert sind. Soll der CAN-Bus später durch eine weitere Teilnehmerstation erweitert werden, gestaltet sich die Festlegung ihrer Identifizierungskennung als Sender noch aufwendiger oder sehr schwierig. Es besteht daher Bedarf an einer Lösung, welche diese Probleme beseitigt.

### Offenbarung der Erfindung

Daher ist es Aufgabe der vorliegenden Erfindung, eine Teilnehmerstation eines Bussystems und ein Verfahren zur Übertragung von Daten zwischen Teilnehmerstationen eines Bussystems bereitzustellen, welche das vorgenannte Problem lösen, und insbesondere ermöglichen, dass kein Datenverlust entsteht, wenn mehr als eine Teilnehmerstation in einem CAN-Bussystem Nachrichten mit einer Identifizierungskennung verschickt, mit welcher auch eine andere Teilnehmerstation des CAN-Bussystems Nachrichten verschickt.

Die Aufgabe wird durch eine Teilnehmerstation eines Bussystems mit den Merkmalen des Anspruchs 1 gelöst. Die Teilnehmerstation umfasst eine Vergleichseinrichtung zum Vergleich einer Identifizierungskennung einer empfangenen Nachricht mit einer vorkonfigurierten Sendeidentifizierungskennung eines Sendespeichers der Teilnehmerstation.

Die beschriebene Teilnehmerstation kann selbstständig erkennen, ob eine andere Teilnehmerstation im Bussystem Nachrichten mit einer Identifizierungskennung verschickt, mit welchem auch die Teilnehmerstationen Nachrichten zu verschicken hat. Auf diese Weise können Nachrichtenkollisionen in dem Bussystem auf einfache Weise wirksam verhindert werden.

Die Teilnehmerstation kann verhindern, dass von ihr gesendete Nachrichten verloren gehen. Zudem kann die Teilnehmerstation verhindern, dass von ihr gesendete Nachrichten die Nachrichten anderer Teilnehmerstationen mit der gleichen Identifizierungskennung, also gleicher Priorität, zerstören.

Mit der beschriebenen Teilnehmerstation kann die Konfiguration von Teilnehmerstationen für ein CAN-Bussystem deutlich vereinfacht werden. Zudem ist es möglich, ein bestehendes Bussystem ohne großen Aufwand in Bezug auf Kosten und Zeit zu erweitern.

Vorteilhafte weitere Ausgestaltungen der Teilnehmerstation sind in den abhängigen Ansprüchen angegeben.

Es ist möglich, dass die Teilnehmerstation zudem mit einer Sperreinrichtung zum Sperren eines Sendespeichers der Teilnehmerstation ausgestattet ist, wenn das Vergleichsergebnis der Vergleichseinrichtung ergibt, dass die Identifizierungskennung der empfangenen Nachricht gleich der für den Sendespeicher vorkonfigurierten Sendeidentifizierungskennung ist.

Es ist auch möglich, dass die Teilnehmerstation zudem eine Statusbitsetzeinrichtung zum Setzen eines Kollisions-Statusbits aufweist, um zu signalisieren, dass in dem Bussystem die vorkonfigurierte Identifizierungskennung eines Sendespeichers der Teilnehmerstation mehrfach vergeben ist, wenn das Vergleichsergebnis der Vergleichseinrichtung ergibt, dass die Identifizierungskennung der empfangenen Nachricht gleich der für den Sendespeicher vorkonfigurierten Sendeidentifizierungskennung ist.

Bevorzugt weist die Teilnehmerstation eine Vergleichseinrichtung auf, die derart ausgestaltet ist, dass sie den Vergleich der Identifizierungskennungen nur für eine fehlerfrei empfangene Nachricht vornimmt.

Vorzugsweise hat die Teilnehmerstation eine Vergleichseinrichtung, die zudem zum Vergleich der Identifizierungskennung einer empfangenen Nachricht mit einem vorkonfigurierten Empfangsfilter eines Empfangsspeichers der Teilnehmerstation ausgestaltet ist.

Die zuvor beschriebene Teilnehmerstation kann Teil eines Bussystems zur Übertragung von Daten zwischen Teilnehmerstationen sein, welches mindestens eine solche zuvor beschriebene Teilnehmerstation aufweist.

Die zuvor genannte Aufgabe wird zudem durch ein Verfahren zur Übertragung von Nachrichten zwischen Teilnehmerstationen eines Bussystems mit den Merkmalen des Anspruchs 7 gelöst. Das Verfahren hat den Schritt: Vergleichen, mit einer Vergleichseinrichtung, einer Identifizierungskennung einer empfangenen Nachricht mit einer vorkonfigurierten Sendeidentifizierungskennung eines Sendespeichers der Teilnehmerstation.

Mit dem Verfahren können die gleichen Vorteile erzielt werden, die zuvor in Bezug auf die Teilnehmerstation genannt sind.

Vorteilhafte weitere Ausgestaltungen des Verfahrens sind in den abhängigen Ansprüchen angegeben.

Vorteilhafter Weise umfasst das Verfahren zudem den Schritt eines Sperrens eines Sendespeichers der Teilnehmerstation, wenn das Vergleichsergebnis der Vergleichseinrichtung ergibt, dass die Identifizierungskennung der empfangenen Nachricht gleich der für den Sendespeicher vorkonfigurierten Sendeidentifizierungskennung ist.

Es ist von Vorteil, dass das Verfahren zudem den Schritt eines Setzens eines Kollisions-Statusbits aufweist, um zu signalisieren, dass in dem Bussystem die vorkonfigurierte Identifizierungskennung eines Sendespeichers der Teilnehmerstation mehrfach vergeben ist, wenn das Vergleichsergebnis der Vergleichseinrichtung ergibt, dass die Identifizierungskennung der empfangenen Nachricht gleich der für den Sendespeicher vorkonfigurierten Sendeidentifizierungskennung ist.

Der Schritt des Vergleichens kann einen Vergleich der Identifizierungskennung einer empfangenen Nachricht mit einem vorkonfigurierten Empfangsfilter eines Empfangsspeichers der Teilnehmerstation umfassen und/oder nur für eine fehlerfrei empfangene Nachricht ausgeführt werden.

Weitere mögliche Implementierungen der Erfindung umfassen auch nicht explizit genannte Kombinationen von zuvor oder im Folgenden bezüglich des Ausführungsbeispiels beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand eines Ausführungsbeispiels näher beschrieben. Es zeigen:
Fig. 1 ein Übersichtsblockschaltbild eines Bussystem gemäß dem Ausführungsbeispiel;
Fig. 2 eine vereinfachte Ansicht eines Aufbaus einer über das Bussystem gemäß dem Ausführungsbeispiel gesendeten Nachricht;
Fig. 3 ein Detailblockschaltbild eines Teils einer Teilnehmerstation gemäß dem Ausführungsbeispiel; und
Fig. 4 ein Flussdiagramm eines Verfahrens gemäß dem Ausführungsbeispiel.

In den Figuren sind gleiche oder funktionsgleiche Elemente, sofern nichts anderes angegeben ist, mit denselben Bezugszeichen versehen.

### Beschreibung des Ausführungsbeispiels

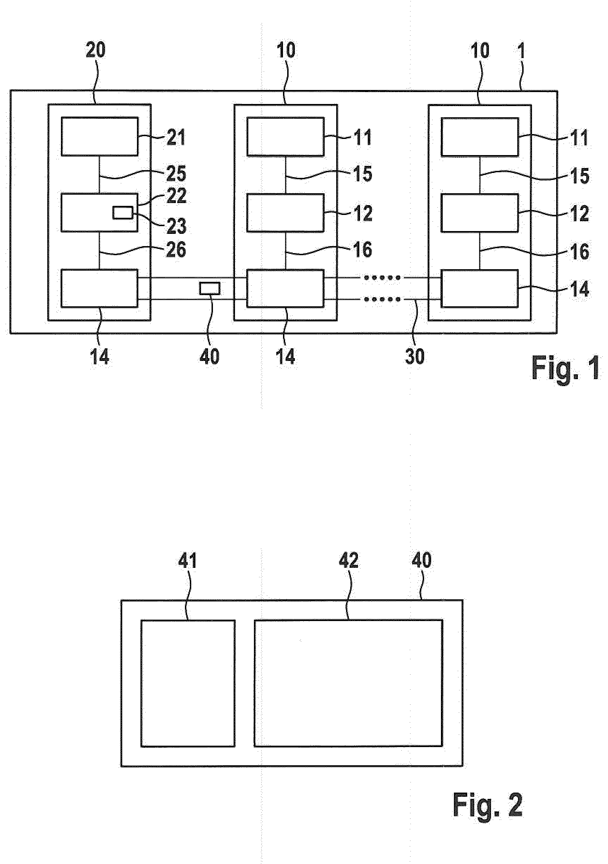

Fig. 1 zeigt ein Bussystem, das beispielsweise ein CAN-Bussystem sein kann, das in einem Fahrzeug, usw. oder im Krankenhaus usw. Verwendung finden kann. Das Bussystem 1 hat zwei erste Teilnehmerstationen 10, eine zweite Teilnehmerstation 20, und einen Bus 30, an welchen die erste und zweite Teilnehmerstation 10, 20 angeschlossen sind und über welchen die erste und zweite Teilnehmerstation 10, 20 Nachrichten 40 senden und empfangen können.

In Fig. 1 haben die ersten Teilnehmerstationen 10 jeweils einen Mikrocomputer 11, eine CAN-Steuereinrichtung 12, die nachfolgend CAN-Controller 12 genannt wird, und eine CAN-Sende-/Empfangseinrichtung 14, die nachfolgend CAN-Transceiver 14 genannt wird. Der Mikrocomputer 11 ist über eine Verbindung 15 mit dem CAN-Controller 12 verbunden. Der CAN-Controller 12 ist über eine Verbindung 16 mit dem CAN-Transceiver 14 verbunden. Über die Verbindungen 15, 16 können Daten zwischen dem Mikrocomputer 11, dem CAN-Controller 12 und dem CAN-Transceiver 14 ausgetauscht werden. Die Daten können über das Bussystem 1 bzw. den Bus 30 zu übertragende Nachrichten 40 und/oder Konfigurations-, Steuer- und Statusinformationen sein.

Zudem hat in Fig. 1 die zweite Teilnehmerstation 20 jeweils einen Mikrocomputer 21, eine CAN-Steuereinrichtung 22, die nachfolgend CAN-Controller 22 genannt wird, mit einer Vergleichseinrichtung 23, und eine CAN-Sende-/Empfangseinrichtung 24, die nachfolgend CAN-Transceiver 24 genannt wird. Der Mikrocomputer 21 ist über eine Verbindung 25 mit dem CAN-Controller 22 verbunden. Ferner ist der CAN-Controller 22 über eine Verbindung 26 mit dem CAN-Transceiver 24 verbunden. Die Verbindungen 25, 26 haben bei der zweiten Teilnehmerstation 20 die gleiche Funktion wie die Verbindungen 15, 16 bei den ersten Teilnehmerstationen 10.

Wie aus Fig. 1 ersichtlich, hat nur die zweite Teilnehmerstation 20 eine Vergleichseinrichtung 23. Die ersten Teilnehmerstationen 10 können somit eine Teilnehmerstation repräsentieren, welche schon zuvor in dem Bussystem 1 vorhanden war. Demgegenüber kann die zweite Teilnehmerstation 20 eine Teilnehmerstation repräsentieren, um welche das Bussystem 1 später erweitert wurde.

Fig. 2 stellt stark vereinfacht den Aufbau einer Nachricht 40 dar, wie sie über den Bus 30 von einer der Teilnehmerstationen 10, 20 versendet wird. Die Nachricht 40 hat eine Identifizierungskennung 41 und sonstige Inhalte 42, die hier nicht näher bezeichnet sind. Die sonstigen Inhalte 42 umfassen alle Inhalte, die eine Nachricht 40 gemäß dem CAN-Protokoll aufweist. Vor der Identifizierungskennung 41 ist in der Nachricht 40 in der Regel noch ein Startbit vorhanden, das in Fig. 2 jedoch der Einfachheit halber weggelassen ist und hier ebenfalls zu den sonstigen Inhalten 42 gehört. Die Identifizierungskennung 41 wird der Nachricht 40 von der jeweiligen Teilnehmerstation 10, 20 hinzugefügt, bevor die Nachricht 40 von dem CAN-Transceiver 14, 24 der jeweiligen Teilnehmerstation 10, 20 über den Bus 30 versendet wird.

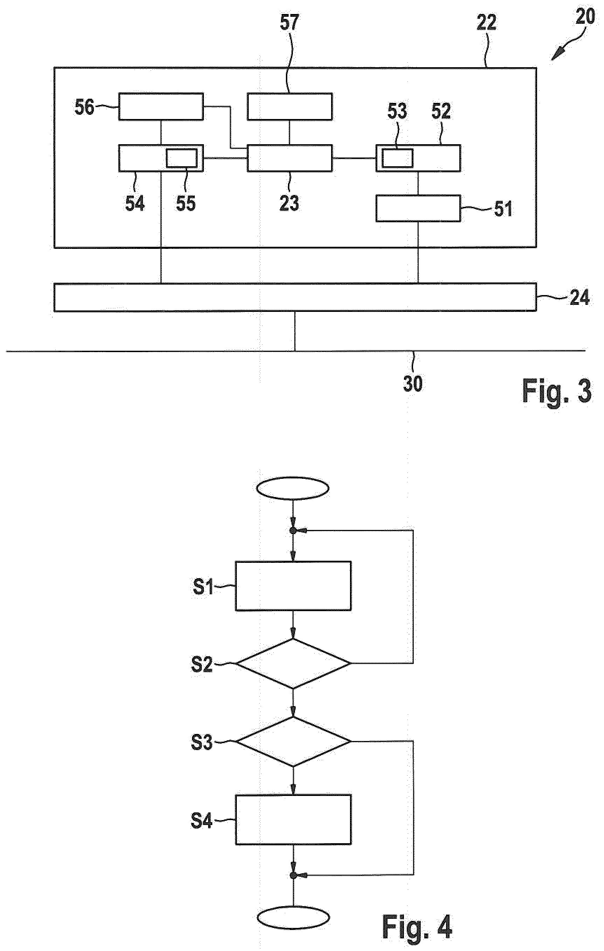

Fig. 3 zeigt den Aufbau des CAN-Controllers 22 mit der Vergleichseinrichtung 23 und zusammen mit dem CAN-Transceiver 14 genauer. Der CAN-Controller 22 hat neben der Vergleichseinrichtung 23 einen Empfangsfilter 51, einen Empfangsspeicher 52 mit einer vorkonfigurierten Empfangsidentifizierungskennung 53, einen Sendespeicher 54 mit einer vorkonfigurierten Sendeidentifizierungskennung 55, eine Sperreinrichtung 56, und eine Statusbitsetzeinrichtung 57.

In Fig. 3 dient der Empfangsfilter 51 zur Filterung der von dem CAN-Transceiver 14 entgegengenommen Nachrichten 40 gemäß vorkonfigurierten Empfangskriterien. Hierbei wird die Empfangsidentifizierungskennung 53 des Empfangsspeichers 52 in Betracht gezogen. Es werden nur Nachrichten 40 empfangen und in dem Empfangsspeicher 52 gespeichert, deren Identifizierungskennung 41 gleich der Empfangsidentifizierungskennung 53 ist. Der Empfangsspeicher 52 kann ein FIFO-Speicher sein, welcher nach dem bekannten Prinzip einer FIFO (First In First Out) arbeitet, wobei zuerst in den Empfangsspeicher 52 gespeicherte Nachrichten 40 auch zuerst aus dem Empfangsspeicher 52 ausgelesen werden.

Der Sendespeicher 54 in Fig. 3 sendet nur Nachrichten mit der vorkonfigurierten Sendeidentifizierungskennung 55. In Bezug auf den Sendespeicher 54 ist die Teilnehmerstation 20 (Fig. 1), genauer gesagt ihr CAN-Controller 22, derart eingerichtet, dass seine Vergleichseinrichtung 23 nach Empfang einer fehlerfreien Nachricht 40 die Identifizierungskennung 41 der Nachricht 40 mit der vorkonfigurierten Sendeidentifizierungskennung 55 des Sendespeichers 54 vergleicht. Je nach Ergebnis dieses Vergleichs der Vergleichseinrichtung 23 sperrt die Sperreinrichtung 56 den Sendespeicher 54 oder nicht. Zudem setzt die Statusbitsetzeinrichtung 57 ein Kollisions-Statusbit, um zu signalisieren, dass in dem Bussystem 1 die vorkonfigurierte Sendeidentifizierungskennung 55 des Sendespeichers 54 der Teilnehmerstation 20 mehrfach vergeben ist. Dieser Ablauf ist genauer in Fig. 4 dargestellt.

Fig. 4 zeigt das von dem CAN-Controller 22, genauer gesagt seiner Vergleichseinrichtung 23, durchgeführte Verfahren, wenn die Teilnehmerstation 20 eine fehlerfreie Nachricht 40 empfängt. Nach dem Start des Verfahrens wird bei einem Schritt S1 von dem CAN-Transceiver 24 eine Nachricht 40 empfangen und an den CAN-Controller 22 über die Verbindung 26 weitergeleitet. Danach geht der Fluss zu einem Schritt S2 weiter.

Bei dem Schritt S2 wird von dem CAN-Controller 22 geprüft, ob die Nachricht 40 fehlerfrei empfangen wurde oder nicht. Lautet die Antwort bei dem Schritt S2 NEIN, geht der Ablauf zu dem Schritt S1 zurück.

Lautet die Antwort bei dem Schritt S2 jedoch JA, geht der Fluss zu einem Schritt S3 weiter.

Bei dem Schritt S3 wird mittels der Vergleichseinrichtung 23 geprüft, ob die Identifizierungskennung 41 der fehlerfrei empfangenen Nachricht 40 gleich der Sendeidentifizierungskennung 55 in dem Sendespeicher 54 des CAN-Controllers 22 ist oder nicht. Lautet die Antwort bei dem Schritt S3 NEIN, ist das Verfahren beendet.

Lautet die Antwort bei dem Schritt S3 jedoch JA, geht der Fluss zu einem Schritt S4 weiter.

Bei dem Schritt S4 wird der Sendespeicher 54, welcher mit der Sendeidentifizierungskennung 55 konfiguriert ist, mittels der Sperreinrichtung 56 für das Senden gesperrt. Zudem setzt die Statusbitsetzeinrichtung 57 ein Statusbit, das Kollisions-Statusbit, welches der Teilnehmerstation 20 den aufgetretenen Konflikt mit einer Fehlermeldung signalisiert. Danach ist das Verfahren beendet. Aufgrund der Fehlermeldung kann beispielsweise ein Servicetechniker den Sendespeicher 54 mit einer anderen Sendeidentifizierungskennung 55 konfigurieren, um den Fehler zu beheben.

Auf diese Art wird verhindert, dass es zu einem Sendekonflikt zwischen zwei Teilnehmerstationen 10, 20 in dem Bus 30 kommt. Es werden dadurch nämlich nie zwei Nachrichten 50 mit gleicher Identifizierungskennung 41 zeitgleich auf dem Bus 30 gesendet.

Alle zuvor beschriebenen Ausgestaltungen der zweiten Teilnehmerstation 20 und des Verfahrens können einzeln oder in allen möglichen Kombinationen Verwendung finden. Zusätzlich sind insbesondere folgende Modifikationen denkbar.

Das zuvor beschriebene Bussystem 1 ist anhand eines auf dem CAN-Protokoll basierenden Bussystems 1 beschrieben. Das Bussystem 1 kann jedoch auch eine andere Art von Kommunikationsnetz sein. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20 auf einen gemeinsamen Kanal gewährleistet ist.

Das Bussystem 1 gemäß dem Ausführungsbeispiel ist insbesondere ein CAN-Netzwerk oder ein TTCAN-Netzwerk oder ein CAN FD-Netzwerk.

Die Anzahl der ersten und zweiten Teilnehmerstationen 10, 20 in dem Bussystem 1 ist beliebig. Es können beispielsweise mehr oder weniger als zwei erste Teilnehmerstationen 10 in dem Bussystem 1 vorhanden sein. Zudem kann auch mehr als eine zweite Teilnehmerstation 20 in dem Bussystem 1 vorhanden sein. Es können insbesondere auch nur zweite Teilnehmerstationen 20 in dem Bussystem 1 vorhanden sein.

Die zweite Teilnehmerstation 20 kann mehr als einen Empfangsspeicher 52 aufweisen. Zudem kann die zweite Teilnehmerstation 20 mehr als einen Sendespeicher 54 aufweisen. Demzufolge kann die Vergleichseinrichtung 23 den Vergleich der Identifizierungskennungen 41, 53, 55 für alle Empfangsspeicher und Sendespeicher ausführen.

Der Schritt S4 des Verfahrens kann auch nur den Schritt des Vergleichens umfassen. Bevorzugt wird aber, wenn der Schritt S4 neben dem Schritt des Vergleichens auch den Schritt des Setzens des Kollisions-Statusbits hat, da dann für einen Servicetechniker eine Fehlermeldung sichtbar ist. In diesem Fall muss der Schritt des Sperrens des Sendespeichers 55 nicht umfasst sein.

## Patentansprüche

1. Teilnehmerstation (20) eines Bussystems (1), mit
einem Sendespeicher (54) zum Senden von Nachrichten mit einer vorkonfigurierten Sendeidentifizierungskennung (55),
wobei jede Sendeidentifizierungskennung (55) für eine bestimmte Priorität einer Nachricht steht,
wobei die Aufteilung der Berechtigung zum Senden der Nachricht mittels Arbitrierung durch Senden der Sendeidentifizierungskennung (55) erfolgt, und einer Vergleichseinrichtung (23) zum Vergleich einer Identifizierungskennung (41) einer empfangenen Nachricht (40) mit der vorkonfigurierten Sendeidentifizierungskennung (55) des Sendespeichers (54) der Teilnehmerstation (20).

2. Teilnehmerstation (20) nach Anspruch 1, zudem mit einer Sperreinrichtung (56) zum Sperren des Sendespeichers (54) der Teilnehmerstation (20), wenn das Vergleichsergebnis der Vergleichseinrichtung (23) ergibt, dass die Identifizierungskennung (41) der empfangenen Nachricht (40) gleich der für den Sendespeicher (54) vorkonfigurierten Sendeidentifizierungskennung (55) ist.

3. Teilnehmerstation (20) nach Anspruch 1 oder 2, zudem mit einer Statusbitsetzeinrichtung (57) zum Setzen eines Kollisions-Statusbits, um zu signalisieren, dass in dem Bussystem (1) die vorkonfigurierte Identifizierungskennung (55) eines Sendespeichers (54) der Teilnehmerstation (20) mehrfach vergeben ist, wenn das Vergleichsergebnis der Vergleichseinrichtung (23) ergibt, dass die Identifizierungskennung (41) der empfangenen Nachricht (40) gleich der für den Sendespeicher (54) vorkonfigurierten Sendeidentifizierungskennung (55) ist.

4. Teilnehmerstation (20) nach einem der vorangehenden Ansprüche, wobei die Vergleichseinrichtung (23) derart ausgestaltet ist, dass sie den Vergleich der Identifizierungskennungen (41; 53; 55) nur für eine fehlerfrei empfangene Nachricht (40) vornimmt.

5. Teilnehmerstation (20) nach einem der vorangehenden Ansprüche, wobei die Vergleichseinrichtung (23) zudem zum Vergleich der Identifizierungskennung (41) einer empfangenen Nachricht (40) mit einem vorkonfigurierten Empfangsfilter (51) eines Empfangsspeichers (52) der Teilnehmerstation (20) ausgestaltet ist.

6. Bussystem (1), das mindestens einer Teilnehmerstation (20) nach einem der vorangehenden Ansprüche und eine zweite Teilnehmerstation enthält, wobei das Bussystem zur Übertragung von Daten zwischen der Teilnehmerstation (20) nach einem der vorangehenden Ansprüche und der zweite Teilnehmerstation angepasst ist.

7. Verfahren zur Übertragung von Nachrichten (40) zwischen Teilnehmerstationen (10, 20) eines Bussystems (1),
wobei wenigstens eine Teilnehmerstation (20) einen Sendespeicher (54) zum Senden von Nachrichten mit einer vorkonfigurierten Sendeidentifizierungskennung (55) aufweist,
wobei jede Sendeidentifizierungskennung (55) für eine bestimmte Priorität einer Nachricht steht,
wobei die Aufteilung der Berechtigung zum Senden der Nachricht mittels Arbitrierung durch Senden der Sendeidentifizierungskennung (55) erfolgt, mit den Schritten
Empfang (S1) einer Nachricht (40) durch die wenigstens eine Teilnehmerstation (20),
Vergleichen (S3) mit einer Vergleichseinrichtung (23) einer Identifizierungskennung (41) der empfangenen Nachricht (40) mit der vorkonfigurierten Sendeidentifizierungskennung (55) des Sendespeichers (54) der wenigstens einen Teilnehmerstation (20).

8. Verfahren nach Anspruch 7, zudem mit dem Schritt, Sperren (S4) des Sendespeichers (54) der Teilnehmerstation (20), wenn das Vergleichsergebnis der Vergleichseinrichtung (23) ergibt, dass die Identifizierungskennung (41) der empfangenen Nachricht (40) gleich der für den Sendespeicher (54) vorkonfigurierten Sendeidentifizierungskennung (55) ist.

9. Verfahren nach Anspruch 7 oder 8, zudem mit dem Schritt Setzen (S4) eines Kollisions-Statusbits, um zu signalisieren, dass in dem Bussystem (1) die vorkonfigurierte Identifizierungskennung (55) eines Sendespeichers (54) der Teilnehmerstation (20) mehrfach vergeben ist, wenn das Vergleichsergebnis der Vergleichseinrichtung (23) ergibt, dass die Identifizierungskennung (41) der empfangenen Nachricht (40) gleich der für den Sendespeicher (54) vorkonfigurierten Sendeidentifizierungskennung (55) ist.

10. Verfahren nach einem der Ansprüche 7 bis 9, wobei der Schritt des Vergleichens (S3) einen Vergleich der Identifizierungskennung (41) einer empfangenen Nachricht (40) mit einem vorkonfigurierten Empfangsfilter (51) eines Empfangsspeichers (52) der Teilnehmerstation (20) umfasst und/oder nur für eine fehlerfrei empfangene Nachricht (40) ausgeführt wird.

## Claims

1. Subscriber station (20) of a bus system (1), having a transmission memory (54) for sending messages with a preconfigured transmission identification identifier (55),
each transmission identification identifier (55) representing a particular priority of a message, wherein the authorization to send the message is split by means of arbitration by sending the transmission identification identifier (55), and
a comparison device (23) for comparing an identification identifier (41) of a received message (40) with the preconfigured transmission identification identifier (55) of the transmission memory (54) of the subscriber station (20).

2. Subscriber station (20) according to Claim 1, moreover having a disabling device (56) for disabling the transmission memory (54) of the subscriber station (20) if the comparison result of the comparison device (23) reveals that the identification identifier (41) of the received message (40) is the same as the transmission identification identifier (55) preconfigured for the transmission memory (54).

3. Subscriber station (20) according to Claim 1 or 2, moreover having a status bit setting device (57) for setting a collision status bit in order to signal that the preconfigured identification identifier (55) of a transmission memory (54) of the subscriber station (20) has been allocated repeatedly in the bus system (1) if the comparison result of the comparison device (23) reveals that the identification identifier (41) of the received message (40) is the same as the transmission identification identifier (55) preconfigured for the transmission memory (54).

4. Subscriber station (20) according to one of the preceding claims, wherein the comparison device (23) is configured such that it performs the comparison of the identification identifiers (41; 53; 55) only for a correctly received message (40).

5. Subscriber station (20) according to one of the preceding claims, wherein the comparison device (23) is moreover configured to compare the identification identifier (41) of a received message (40) with a preconfigured reception filter (51) of a reception memory (52) of the subscriber station (20).

6. Bus system (1) that includes at least one subscriber station (20) according to one of the preceding claims and a second subscriber station, wherein the bus system is adapted to transmit data between the subscriber station (20) according to one of the preceding claims and the second subscriber station.

7. Method for transmitting messages (40) between subscriber stations (10, 20) of a bus system (1), wherein at least one subscriber station (20) has a transmission memory (54) for sending messages with a preconfigured transmission identification identifier (55),
each transmission identification identifier (55) representing a particular priority of a message, wherein the authorization to send the message is split by means of arbitration by sending the transmission identification identifier (55), having the steps of
reception (S1) of a message (40) by the at least one subscriber station (20),
comparison (S3), using a comparison device (23), of an identification identifier (41) of the received message (40) with the preconfigured transmission identification identifier (55) of the transmission memory (54) of the at least one subscriber station (20) .

8. Method according to Claim 7, moreover having the step of disabling (S4) of the transmission memory (54) of the subscriber station (20) if the comparison result of the comparison device (23) reveals that the identification identifier (41) of the received message (40) is the same as the transmission identification identifier (55) preconfigured for the transmission memory (54).

9. Method according to Claim 7 or 8, moreover having the step of setting (S4) of a collision status bit in order to signal that the preconfigured identification identifier (55) of a transmission memory (54) of the subscriber station (20) has been allocated repeatedly in the bus system (1) if the comparison result of the comparison device (23) reveals that the identification identifier (41) of the received message (40) is the same as the transmission identification identifier (55) preconfigured for the transmission memory (54).

10. Method according to one of Claims 7 to 9, wherein the step of comparison (S3) comprises a comparison of the identification identifier (41) of a received message (40) with a preconfigured reception filter (51) of a reception memory (52) of the subscriber station (20) and/or is executed only for a correctly received message (40).

## Revendications

1. Station d'abonné (20) d'un système de bus (1), comportant
une mémoire d'émission (54) destinée à émettre des messages ayant un identifiant d'identification d'émission (55) préconfiguré,
dans laquelle chaque identifiant d'identification d'émission (55) représente une priorité déterminée d'un message,
dans laquelle la distribution de l'autorisation d'émettre le message est effectuée par arbitrage en émettant l'identifiant d'identification d'émission (55), et
un moyen de comparaison (23) destiné à comparer un identifiant d'identification (41) d'un message (40) reçu à l'identifiant d'identification d'émission (55) préconfiguré de la mémoire d'émission (54) de la station d'abonné (20).

2. Station d'abonné (20) selon la revendication 1, comprenant en outre un dispositif de blocage (56) destiné à bloquer la mémoire d'émission (54) de la station d'abonné (20) lorsque le résultat de comparaison du dispositif de comparaison (23) indique que l'identifiant d'identification (41) du message (40) reçu est identique à l'identifiant d'identification d'émission (55) préconfiguré pour la mémoire d'émission (54) .

3. Station d'abonné (20) selon la revendication 1 ou 2, comprenant en outre un dispositif de réglage de bit d'état (57) destiné à régler un bit d'état de collision, afin de signaler que l'identifiant d'identification préconfiguré (55) d'une mémoire d'émission (54) de la station d'abonné (20) est attribué plusieurs fois dans le système de bus (1) lorsque le résultat de comparaison du dispositif de comparaison (23) indique que l'identifiant d'identification (41) du message (40) reçu est identique à l'identifiant d'identification (55) préconfiguré pour la mémoire d'émission (54).

4. Station d'abonné (20) selon l'une des revendications précédentes, dans laquelle le comparateur (23) est configuré pour ne comparer les identificateurs d'identification (41 ; 53 ; 55) que pour un message (40) reçu sans erreur.

5. Station d'abonné (20) selon l'une des revendications précédentes, dans laquelle le comparateur (23) est en outre conçu pour comparer l'identificateur d'identification (41) d'un message (40) reçu à un filtre de réception (51) préconfiguré d'une mémoire de réception (52) de la station d'abonné (20).

6. Système de bus (1) comprenant au moins une station d'abonné (20) selon l'une des revendications précédentes et une deuxième station d'abonné, dans lequel le système de bus est conçu pour transmettre des données entre la station d'abonné (20) selon l'une des revendications précédentes et la deuxième station d'abonné.

7. Procédé d'émission de messages (40) entre des stations d'abonnés (10, 20) d'un système de bus (1), dans lequel au moins une station d'abonné (20) comporte une mémoire d'émission (54) destinée à émettre des messages ayant un identificateur d'identification d'émission (55) préconfiguré,
dans lequel chaque identificateur d'émission (55) représente une priorité déterminée d'un message,
dans lequel la distribution de la permission d'émettre le message s'effectue par arbitrage en émettant l'identificateur d'émission (55), comprenant les étapes de
réception (S1) d'un message (40) par au moins une station d'abonné (20) et de
comparaison (S3) au moyen d'un comparateur (23) d'un identificateur d'identification (41) du message (40) reçu à l'identificateur d'identification d'émission (55) préconfiguré de la mémoire d'émission (54) de l'au moins une station d'abonné (20).

8. Procédé selon la revendication 7, comprenant en outre l'étape de blocage (S4) de la mémoire d'émission (54) de la station d'abonné (20) lorsque le résultat de comparaison du dispositif de comparaison (23) indique que l'identificateur d'identification (41) du message (40) reçu est identique à l'identificateur d'identification d'émission (55) préconfiguré pour la mémoire d'émission (54) .

9. Procédé selon la revendication 7 ou 8, comprenant en outre l'étape de réglage (S4) d'un bit d'état de collision pour signaler que l'identificateur d'identification préconfiguré (55) d'une mémoire d'émission (54) de la station d'abonné (20) est attribué plusieurs fois dans le système de bus (1) lorsque le résultat de comparaison du dispositif de comparaison (23) indique que l'identificateur d'identification (41) du message (40) reçu est identique à l'identificateur d'identification d'émission (55) préconfiguré pour la mémoire d'émission (54).

10. Procédé selon l'une des revendications 7 à 9, dans lequel l'étape de comparaison (S3) comprend une comparaison de l'identificateur d'identification (41) d'un message (40) reçu à un filtre de réception préconfiguré (51) d'une mémoire de réception (52) de la station d'abonné (20) et/ou n'est effectuée que pour un message (40) reçu sans erreur.
